# EUROPEAN PATENT SPECIFICATION

(11) **EP 0 805 474 B1**
(45) Date of publication and mention of the grant of the patent: **19.02.2003**
(21) Application number: 97400914.4
(22) Date of filing: 23.04.1997
(51) Int. Cl.: H01J 29/86, H01J 29/89

(54) **Composition for anti-glare, anti-static coating**
Zusammensetzung für reflexionsfreie, antistatische Beschichtung
Composition pour revêtement antireflet, antistatique

(30) Priority: 30.04.1996 IT MI960846
(43) Date of publication of application: 05.11.1997
(73) Proprietor: VIDEOCOLOR S.p.A., 03012 Anagni (IT)
(72) Inventor: Cinquina, Patrizia, 66054 Vasto (IT); Magnone, Giuseppe, 03011 Alatri (IT); Manciocco, Guido, 00034 Colleferro (IT)
(74) Representative: Ruellan-Lemonnier, Brigitte

(56) References cited:
- EP-A- 0 567 835
- WO-A-96/05606
- DE-A- 2 016 074
- DE-A- 4 229 192
- DE-C- 3 203 291
- GB-A- 2 161 320

## Description

This invention relates to an anti-glare, anti-static coating for a reflective-transmissive surface, such as the exterior surface of a faceplate panel of a cathode-ray tube (CRT), and to a composition and a method of coating the faceplate panel.

For many applications, it is desirable to have a CRT faceplate that has both anti-glare and anti-static properties. The term "anti-glare", as used herein, is the reduction in brightness and resolution of the reflected image of an ambient light source. Glare of light from ambient light sources interferes with the viewing of an image on the tube faceplate, and is, therefore, objectionable to the viewer. The "anti-static" properties of a coating relate the elapsed time required to discharge the electrostatic voltage on the coated faceplate.

U.S. Pat. No. 4,563,612, issued to Deal et al. on Jan. 7, 1986, describes one such anti-glare, anti-static coating formed from an aqueous solution containing a silicate material that provides the anti-glare performance, and an operable quantity of an inorganic metallic compound to impart the anti-static characteristics to the coating. The coating is applied by air spraying the coating solution onto the warmed (40 - 45 °C) faceplate panel of a CRT, and then baking the CRT for at least 10 minutes at a temperature of 120°C, with a 30 minute heat-up period and a 30 minute cool-down.

Organic polymers, such as polypyrrole compounds, have been increasingly used to provide transparent, anti-static layers, because of their very high room-temperature conductivity. However, many of these materials are mechanically weak, insufficiently resistant to solvents or have limited stability and must be processed shortly after they have been prepared. U.S. Pat. No. 5,412,279, issued to De Boer on May 2, 1995, describes an anti-static coating for a CRT comprising latex particles of a polypyrrole compound in a silicon dioxide matrix that overcomes the drawbacks described above. The coating is formed by applying to the CRT faceplate the latex particles of the polypyrrole compound that are dispersed in an aqueous solution of a hydrolyzed alkoxysilane compound. The coating also reduces the light transmission of the CRT screen. However, a relatively high processing temperature of between 150°C and 175°C is required to convert the hydrolyzed alkoxysilane compound to silicon dioxide. The coating described in the De Boer patent is not an anti-glare coating; nor is it scratch resistant. Therefore, it must be supplemented with known layers having an anti-reflective or anti-glare effect, or with layers which further increase the scratch resistance.

U.S. Pat. No. 5,291,097, issued to Kawamura et al. on March 1, 1994, describes a coating that possesses anti-static, anti-glare characteristics. Two separate and distinct layers are provided on the exterior surface of the faceplate. The first layer, referred to as the CTE (colored transparent electroconductive) domain is in direct contact with the faceplate. The second layer, referred to as the NGP (non-glare and protective) domain, overlies the CTE layer. The CTE layer, or domain, is formed from an alcohol solution that contains at least one organic dye, at least one electroconductive metal oxide, an alkyl silicate, water and an acid catalyst. The NGP layer is formed from an alcohol solution containing an alkyl silicate, water and an acid catalyst. Generally, the function of the alkyl silicate in the CTE domain is to provide a stable reaction product, while the overlying NGP domain comprising silica improves the chemical and mechanical stability of the coating layers. It is necessary to thoroughly dry the CTE layer, either by baking or steam processing, before the NGP layer is added ; otherwise, the color provided by the dye in the CTE layer will "ooze" and fade, thereby lowering the contrast of the coating.

WO 96-05606 discloses an antistatic coating layer on a display screen of a cathode-ray tube, comprising electroconductive polyethylenedioxythiophene. To improve the mechanical and/or reflective properties of the antistatic layer, one or more additional layers, e.g., containing tetraethoxysilane (TEOS), may be provided.

GB-A-2161320 discloses an antistatic, glare-reducing coating on a cathode-ray tube viewing window, composed of a silicate material, such as derived from a lithium-stabilized silica sol, and an inorganic metallic compound of at least one element selected from platinum, palladium, tin and gold.

DE 4229192 discloses compositions, for antistatic coatings for cathode-ray tube screens, comprising mixtures of an abrasion-resistant material and an electrically conductive polymeric material such as polyethylenedioxythiophene.

The problem to which the present invention is directed is to provide a polymeric electroconductive coating that is transparent and has environmental stability and anti-glare, anti-static properties. It is further directed to a coating that comprises a single layer of compatible materials that are easy to apply and do not require high processing temperatures or extended bakeout times.

According to the present invention, there is provided a composition for reducing glare and for providing an anti-static property when applied to a reflective-transmissive surface (39), characterized in that said composition consists of:
5 to 25 wt. % electroconductive polyethylenedioxythiophene ;
0,5 to 3 wt. % siliceous material selected from the group consisting of lithium stabilized silica sol and tetraethoxysilane; and,
the balance, a solvent selected from the group consisting of an alcohol and deionized water.

In the drawings:
Fig. 1 is a partially broken-away, longitudinal view of a CRT made according to the present invention ;
Fig. 2 is a graph of the anti-static properties showing voltage decay versus discharge time, for an uncoated faceplate panel (2) and for a faceplate panel having a coating (1) made according to the present invention, at 25 % RH (Relative Humidity) and 25 °C; and
Fig. 3 is a graph of the log of the surface resistivity, in ohms per square (Ω/□) versus concentration, in weight percent (wt. %), of the organic polymer in the coating solution.

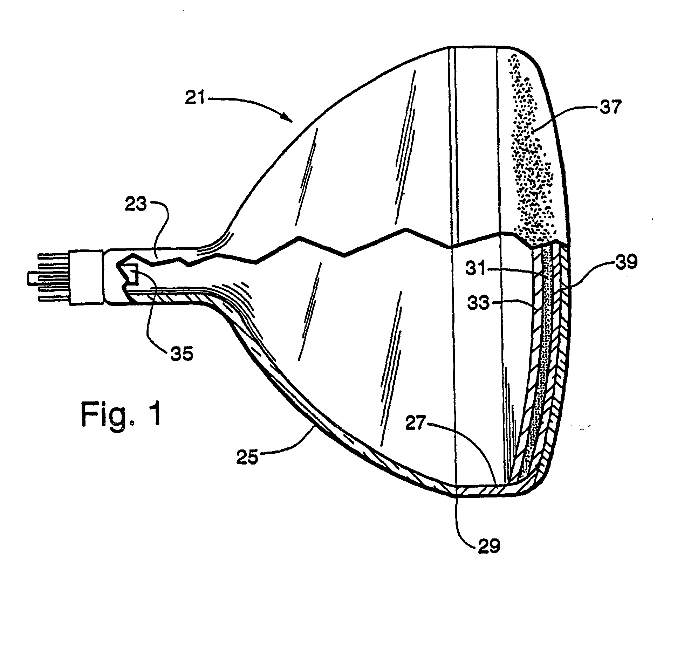

A cathode-ray tube 21, illustrated in Fig. 1, includes an evacuated glass envelope having a neck section 23 integral with a funnel section 25. A glass faceplate panel 27 is joined to the funnel section 25 by a devitrified glass frit seal 29. A luminescent screen 31 of phosphor materials is applied to an interior surface of the faceplate panel 27. A light-reflecting metal film 33 of, for example, aluminum, is deposited on the luminescent screen 31. The luminescent screen 31, when scanned by one or more electron beams (not shown) from a gun 35, is capable of producing a luminescent image which may be viewed through the faceplate panel 27. A novel anti-glare, anti-static coating 37 is applied to a reflective-transmissive surface, such as an exterior surface 39 of the faceplate panel 27, to prevent an electrostatic charge buildup, and to improve the contrast of the image, when viewed through the panel 27.

The anti-glare, anti-static coating 37 is characterized as comprising an organic polymer and a suitable quantity of a siliceous material. The organic polymer is polythiophene-based and forms a conductive film of controlled reflectance, depending on the concentration of the constituents. The thiophene-based polymer readily mixes with lithium polysilicate, which is a lithium-stabilized silica sol in which the ratio of SiO₂ to Li₂O is between about 4:1 and about 25:1. The sol is substantially free of anions other than hydroxyl. The lithium stabilized silica sol differs substantially from a lithium silicate solution, which is a compound dissolved in a solvent and not a sol. Upon subsequent heating, a lithium-sol coating dries to form a lithium silicate coating. Alternatively, the polythiophene-based organic polymer and tetraethoxysilane can be dissolved in isopropyl alcohol to form a totally organic solution that can be applied to the faceplate panel of the CRT.

The coating is applied to the exterior surface 39 of the faceplate panel 27 of the sealed and evacuated tube 21, by carefully cleaning the surface 39 by any of the known scouring and washing methods used to remove dirt, lint, oil, scum, etc., that will not scratch the surface of the faceplate panel. It is preferred to scrub the surface with a commercial scouring compound, and then rinse the surface with water. The surface is then etched, by swabbing it with a 2 - 8 wt. % ammonium bifluoride solution, rinsed with demineralized, i.e., deionized, water, and dried using an air curtain to prevent water marks. The faceplate panel is then warmed to about 30°C -80°C in an oven, or by other suitable means, and coated with the novel coating solution. The coating is cured by drying it in air at a temperature within the range of about 70°C to 80°C. The coating is next washed for about 15-60 seconds with warm deionized water, which is at a temperature of about 40°C to 50°C. The coating is carefully dried in air to avoid the deposition of lint or other foreign particles on the coating.

The novel coating has anti-static characteristics; that is, when grounded, the coating does not store electrostatic charge when the tube is operated in a normal manner. The novel coating also has an anti-glare, or glare-reducing, quality. That is, the coating scatters reflected light and improves image contrast. Additionally, the coating is free of metallic compounds, so there is no increase in spectral reflection due to the presence of the metallic compounds in the coating.

The coating, composition and process for production thereof, according to the present invention, are hereinafter described specifically by way of Examples.

### EXAMPLE 1

The exterior surface 39 of the faceplate panel 27 of an evacuated CRT 21, is cleaned by any of the known scouring and washing procedures and, then, lightly etched with a 5 wt. % ammonium bifluoride solution and rinsed in deionized water. Next, the faceplate panel 27 of the tube is heated within the range of 30°C to 80°C, and a novel liquid coating composition is applied to the warm glass surface.

The coating solution comprises:
5 wt. % of a polymeric electroconductive polymer, such as polyethylenedioxythiophene, manufactured by Bayer AG, Leverkusen, Germany;
1 wt. % of a lithium-stabilized silica sol, such as Lithium Silicate 48, marketed by E. I. DuPont, Wilmington, DE, USA; and
the balance, deionized water.

Preferably, the coating solution is applied to the exterior surface 39 of the faceplate panel 27 by spraying. The coating is cured by drying it in air at a temperature within the range of about 70°C to 80°C. The coating is next washed for about 15-60 seconds with warm deionized water, which is at a temperature of about 40°C to 50°C. The coating is dried in air. The resultant coating has a surface resistivity within the range of 10⁸ to 10⁹ Ω/□ , measured at 25 % RH (Relative Humidity) and at a temperature of 25 °C. The coating 37 has a specular reflectivity of 70 gloss.

### EXAMPLE 2

The exterior surface 39 of the CRT 21 is cleaned and prepared for coating as described in EXAMPLE 1.

The coating solution comprises:
5 wt. % of a polymeric electroconductive polymer, such as polyethylenedioxythiophene, manufactured by Bayer AG, Leverkusen, Germany;
0.5 wt. % of a lithium-stabilized silica sol, such as Lithium Silicate 48, marketed by E. I. DuPont, Wilmington, DE, USA; and
the balance, deionized water.

The solution is sprayed on the exterior surface 39 of the faceplate panel 27, cured, washed and air dried as described in EXAMPLE 1. The resultant coating has a surface resistivity within the range of 10⁹ to 10¹⁰ Ω/□, measured at 25 % RH and at a temperature of 25 °C, and a specular reflectivity of 85 gloss.

### EXAMPLE 3

The exterior surface 39 of the CRT 21 is cleaned and prepared for coating as described in EXAMPLE 1.

The coating solution comprises:
25 wt. % of a polymeric electroconductive polymer, such as polyethylenedioxythiophene, manufactured by Bayer AG, Leverkusen, Germany;
3 wt. % of an organic silane, such as tetraethoxysilane; and
the balance, isopropyl alcohol.

The solution is sprayed on the exterior surface 39 of the faceplate panel 27, cured, washed and air dried as described in EXAMPLE 1. The resultant coating has a surface resistivity within the range of 10⁶ to 10⁷ Ω/□, measured at 25 % RH and at a temperature of 25 °C, and a specular reflectivity of 70 gloss.

### EXAMPLE 4

The exterior surface 39 of the CRT 21 is cleaned and prepared for coating as described in EXAMPLE 1.

The coating solution comprises:
25 wt. % of a polymeric electroconductive polymer, such as polyethylenedioxythiophene, manufactured by Bayer AG, Leverkusen, Germany;
3 wt. % of an organic silane, such as tetraethoxysilane;
36 wt. % isopropyl alcohol; and the balance, deionized water

The solution is sprayed on the exterior surface 39 of the faceplate panel 27, cured, washed and air dried as described in EXAMPLE 1. The resultant coating has a surface resistivity within the range of 10⁶ to 10⁷ Ω/□, measured at 25 % RH and at a temperature of 25 °C, and a specular reflectivity of 70 gloss.

### EXAMPLE 5

The exterior surface 39 of the CRT 21 is cleaned and prepared for coating as described in EXAMPLE 1.

The coating solution comprises:
25 wt. % of a polymeric electroconductive polymer, such as polyethylenedioxythiophene, manufactured by Bayer AG, Leverkusen, Germany;
1 wt. % of a lithium-stabilized silica sol, such as Lithium Silicate 48, marketed by E. I. DuPont, Wilmington, DE, USA; and
the balance, deionized water.

The solution is sprayed on the exterior surface 39 of the faceplate panel 27, cured, washed and air dried as described in EXAMPLE 1. The resultant coating has a surface resistivity within the range of 10⁶ to 10⁷ Ω/□ , measured at 25 % RH and at a temperature of 25 °C, and a specular reflectivity of 66 gloss.

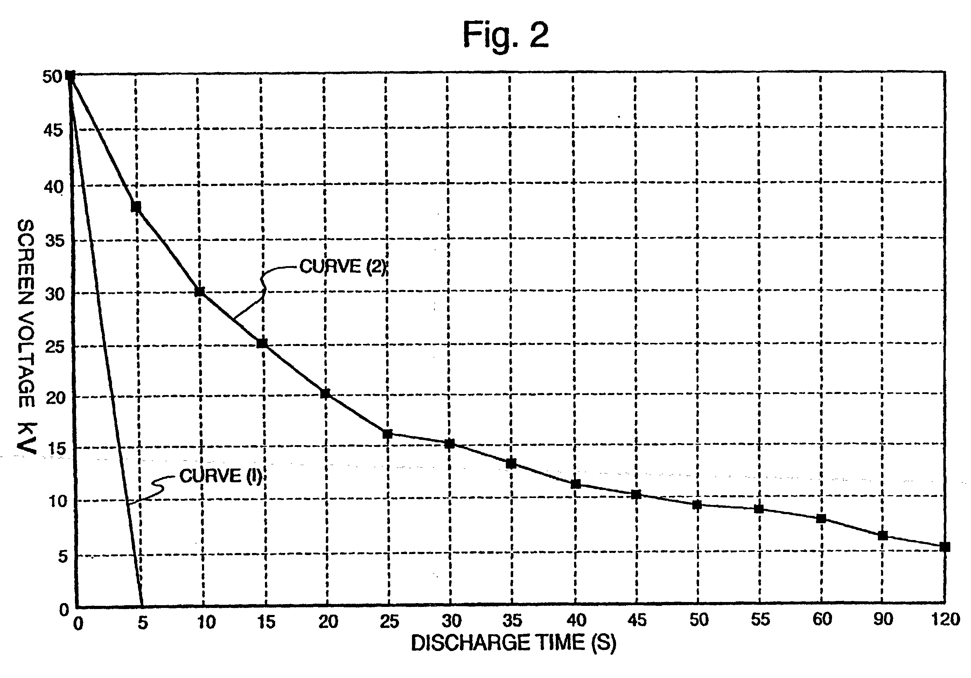

Fig. 2 is a graph of the decay time of the novel coating 37, having a gloss of 70 (curve 1), and of an uncoated faceplate panel (curve 2). Curve 1 represents a coating made using the coating solution described in EXAMPLE 1 and having a surface resistivity within the range of 10⁸ to 10⁹ Ω/□.

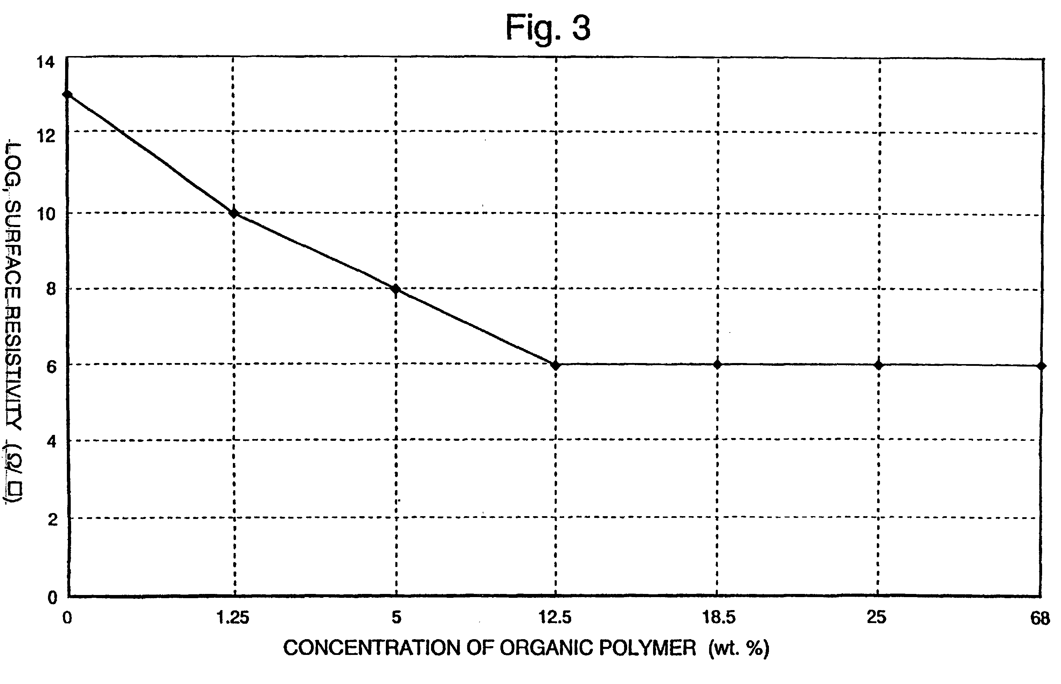

Fig. 3 is a graph showing the effect of the concentration of the thiophene-based organic polymer, polyethylenedioxythiophene, on surface resistivity. The resistivity is minimized, that is, the conductivity is maximized at a concentration of 12.5 wt. % of the organic polymer in the coating solution. Additional amounts of the polymer in the coating solution do not change the resistivity of the final coating 37.

## Claims

1. A composition for reducing glare and for providing an anti-static property when applied to a reflective-transmissive surface (39), **characterized in that** said composition consists of:
5 to 25 wt. % electroconductive polyethylenedioxythiophene;
0.5 to 3 wt. % siliceous material selected from the group consisting of lithium-stabilized silica sol and tetraethoxysilane; and,
the balance, a solvent selected from the group consisting of an alcohol and deionized water.

2. The composition of claim 1, **characterized in that** the amount of said polyethylenedioxythiophene is 25 wt. %, said siliceous material is tetraethoxysilane in the amount of 3 wt. %, and said solvent is isopropyl alcohol.

3. The composition of claim 1, **characterized in that** the amount of said polyethylenedioxythiophene is 25 wt. %, said siliceous material is tetraethoxysilane in the amount of 3 wt. %, and said solvent consists of 36 wt. % isopropyl alcohol and a balance of deionized water.

4. The composition of claim 1, **characterized in that** said siliceous material is lithium-stabilized silica sol in the amount of 0.5 wt. %, and said solvent is deionized water.

5. The composition of claim 1, **characterized in that** said siliceous material is lithium-stabilized silica sol in the amount of 1.0 wt. %, and said solvent is deionized water.

## Patentansprüche

1. Zusammensetzung zur Blendungsverringerung und zur Bildung einer antistatischen Eigenschaft bei der Anbringung auf einer reflektierenden-durchlässigen Oberfläche (39),
**dadurch gekennzeichnet, dass**
die Zusammensetzung aus folgenden Teilen besteht:
5 bis 25 Gewichts-% eines elektrisch leitenden Polyethylendioxythiophen,
0,5 bis 3 Gewichts-% eines siliziumhaltigen Materials, gewählt aus der Gruppe aus einer Lithium-stabilisierten Siliziumlösung und Tetraethoxysilan und
als restlicher Teil ein Lösungsmittel, das aus der Gruppe eines alkoholhaltigen und deionisierten Wasser ausgewählt ist.

2. Zusammensetzung nach Anspruch 1, **dadurch gekennzeichnet, dass** der Anteil des Polyethylendioxythiophen 25 Gewichts-% beträgt, das siliziumhaltige Material Tetraethoxysilan mit einem Anteil von 3 Gewichts-% und das Lösungsmittel Isopropylalkohol ist.

3. Zusammensetzung nach Anspruch 1, **dadurch gekennzeichnet, dass** der Anteil des Polyethylendioxythiophens 25 Gewichts-% beträgt, dass das siliziumhaltige Material Tetraethoxysilan mit einem Anteil von 3 Gewichts-% ist und das Lösungsmittel aus 36 Gewichts-% eines Isopropylalkohols und der restliche Teil aus deionisiertem Wasser besteht.

4. Zusammensetzung nach Anspruch 1, **dadurch gekennzeichnet, dass** das siliziumhaltige Material eine Lithium-stabilisierte Siliziumlösung mit einem Anteil von 0,5 Gewichts-% und das Lösungsmittel deionisiertes Wasser ist.

5. Zusammensetzung nach Anspruch 1, **dadurch gekennzeichnet, dass** das siliziumhaltige Material eine Lithium-stabilisierte Siliziumlösung mit einem Anteil von 1 Gewichts-% und das Lösungsmittel deionisiertes Wasser ist.

## Revendications

1. Composition pour réduire les reflets et procurer une propriété antistatique lorsqu'elle est appliquée sur une surface transmettrice-réflectrice (39), **caractérisée en ce que** ladite composition se compose de:
5 à 25% en poids de polyéthylènedioxythiophène conducteur de l'électricité;
0,5 à 3% en poids de matériau siliceux choisi dans le groupe constitué par un sol de silice stabilisé au lithium et du tétraéthoxysilane; et
le complément, d'un solvant choisi dans le groupe constitué par un alcool et de l'eau déminéralisée.

2. Composition selon la revendication 1, **caractérisée en ce que** la quantité dudit polyéthylènedioxythiophène est de 25% en poids, ledit matériau siliceux est du tétraéthoxysilane, en quantité de 3% en poids, et ledit solvant est de l'alcool isopropylique.

3. Composition selon la revendication 1, **caractérisée en ce que** la quantité dudit polyéthylènedioxythiophène est de 25% en poids, ledit matériau siliceux est du tétraéthoxysilane, en quantité de 3% en poids, et ledit solvant se compose de 36% en poids d'alcool isopropylique et, en complément, d'eau déminéralisée.

4. Composition selon la revendication 1, **caractérisée en ce que** ledit matériau siliceux est un sol de silice stabilisé au lithium, en quantité de 0,5% en poids, et ledit solvant est de l'eau déminéralisée.

5. Composition selon la revendication 1, **caractérisée en ce que** ledit matériau siliceux est un sol de silice stabilisé au lithium, en quantité de 1,0% en poids, et ledit solvant est de l'eau déminéralisée.
